# EUROPEAN PATENT SPECIFICATION

(11) **EP 1 645 486 B1**
(45) Date of publication and mention of the grant of the patent: **14.09.2011**
(21) Application number: 04747706.2
(22) Date of filing: 12.07.2004
(51) Int. Cl.: B62D 1/18

(54) **STEERING DEVICE**
LENKVORRICHTUNG
DISPOSITIF DE COMMANDE

(30) Priority: 16.07.2003 JP 2003197833; 12.05.2004 JP 2004141793
(43) Date of publication of application: 12.04.2006
(73) Proprietor: NSK Ltd., Shinagawa-ku, Tokyo 141-8560 (JP); NSK Steering Systems Co., Ltd., Shinagawa-ku, Tokyo 141-8560 (JP)
(72) Inventor: HIGASHINO, Kiyoharu, c/o NSK Steering Systems Co. Ltd., Maebashi-shi, Gunma 371-8528 (JP); SATO, Kenji, c/o NSK Steering Systems Co., Ltd., Maebashi-shi, Gunma 371-8528 (JP)
(74) Representative: Grünecker, Kinkeldey, Stockmair & Schwanhäusser Anwaltssozietät
(86) International application number: PCT/JP2004/010242
(87) International publication number: WO 2005/007486

(56) References cited:
- EP-A- 1 125 820
- WO-A-02/051689
- WO-A1-03/059718
- WO-A1-03/095286
- FR-A1- 2 714 647
- FR-A1- 2 830 504
- JP-A- 8 230 689
- JP-A- 10 512 826
- JP-A- 2001 191 827
- JP-A- 2002 059 848
- JP-A- 2002 059 850
- JP-A- 2002 087 285

## Description

### Technical Field

The present invention relates to a tilt and telescoping steering system in which the inclination angle and axial position of a steering wheel can be adjusted according to, for example, the driving posture of a driver.

### Background Art

### FR 2 830 504 A1 and FR 2 714 647 A1 disclose a steering system according to the preamble of claim 1.

As vehicle steering systems, there have been known tilt and telescoping steering systems in which not only the inclination angle of a steering wheel but also the axial position thereof can be adjusted according to the build and driving posture of the driver.

Here, there exists an idea to dispose as many of the constituent components of the tilt and telescoping steering system as possible on a side which is close to a steering shaft in order to secure a space in the vicinity of the knees of the driver. In contrast to this idea, Japanese Patent Unexamined Publication JP-T-10-512826discloses a steering system in which the tilting angle of a steering shaft is adjusted by displacing a yoke, which is disposed within an outer column tube for supporting the steering shaft, along vertical grooves formed in a pair of bracket portions.

### Disclosure of the Invention

Incidentally, according to the aforesaid conventional example, the components are assembled to the integral yoke by screwing stud bolts thereinto from both sides thereof via the pair of bracket portions. However, since the bracket portions are stationary, while the yoke is movable in a tilting fashion, there is caused a prying motion between the stud bolts and the bracket portions, leading to a risk that the stud bolts get loosened while in use for a long time. In order to prevent this, the stud bolts need to be bonded as a countermeasure, which causes, in turn, a problem that many man-hours are necessary for assembling and the assembled components become difficult to be disassembled for a repair.

Then, the inventor et al. developed a steering system in which slits are formed in an outer jacket which encloses therein an inner column, so that a force is applied to the inner column in a direction which intersects with the axis of the inner column at right angles from bracket portions disposed on both sides of the outer jacket, whereby the outer jacket is deformed to hold the inner column. In the steering system, while the holding force becomes large in the direction in which the force is applied to the inner column, only a frictional force against the outer jacket constitutes a holding force for the inner column in a vertical direction which intersects with the direction in which the force is so applied to the inner column at right angles and also intersects with the axis of the inner column at right angles, and therefore, there is caused a risk that the inner column is displaced when vibrations or a strong force is applied thereto in the vertical direction.

The invention was made in view of the problem inherent in the related art, and an object thereof is to provide a steering system which can firmly hold the inner column in either of the directions.

According to the invention, there is provided a steering system according to claim 1.

According to the invention, since there is provided the steering system for supporting a steering shaft to which a steering wheel attaches in such a manner as to enable the adjustment of the axial displacement, the steering system comprising an inner column for rotatably supporting the steering shaft, an outer jacket adapted to take, when pressed in a facing direction, either a first state in which an outer circumferential surface of the inner column is held in such a manner as to disable the adjustment of the axial displacement or a second state in which the outer circumferential surface of the inner column is held in such a manner as to enable the adjustment of the axial displacement, a bracket portion for fixing the outer jacket to a vehicle body, and a fixing member for connecting the outer jacket with the bracket portion, wherein when the outer jacket is shifted from the second state to the first state, the inner column receives pressures applied thereto by the outer jacket in a plurality of directions which are different from at least the facing direction, even in the event that vibrations or a force of large magnitude is applied to the inner column, the displacement of the inner column can be suppresses.

In addition, according to the steering system as defined in claim 2, since there is provided the steering system for supporting a steering shaft to which a steering wheel attaches in such a manner as to enable adjustment of the axial displacement thereof, the steering system comprising an inner column for rotatably supporting the steering shaft, a pair of bracket portions mounted on a vehicle body and disposed at positions which face each other with respect to an axis of the steering shaft, a tension member provided in such a manner as to extend between the pair of bracket portions, two fixing members for fixing the tension member relative to the pair of bracket portions, an application member provided between the tension member and the fixing members, the application member applying a relative displacement between the bracket portions and the fixing members in accordance with an operation of a manipulation lever; and

an outer jacket held to the vehicle body through the connection of the tension member, the bracket portions and the fixing members, the outer jacket having:
a pressurizing portion where an outer circumference of the outer jacket contacts with both of the pair of bracket portions at least between the pair of bracket portions by virtue of relative displacement of the pair of bracket portions; and
an inner circumferential surface which encloses and supports an outer circumference of the inner column,
wherein the inner column receives pressurizing forces applied thereto by the bracket portions and the fixing members in a plurality of directions which are different from a relative displacement direction of the outer jacket. , even in the event that vibrations or a force of large magnitude is applied to the inner column, the displacement of the inner column can be suppressed.

Furthermore, in the event that the outer jacket deflects in such a manner that a location thereof which is circumferentially farther apart from the central portion (the horizontal direction in the embodiment which will be described later on) is displaced more largely than a location thereof which is circumferentially closer to the central portion, when the outer jacket contacts the inner column as the pair of bracket portions approach each other, the outer jacket is allowed to deform in such a manner as to surround the outer circumferential side of the inner column, whereby pressurizing forces can be applied thereto from different directions.

In addition, according to the invention, the pair of bracket portions approach each other to reduce a distance therebetween by virtue of the displacement applied to the application member, whereby the outer jacket is held between the tension member and the bracket portions. In addition, since pressurizing forces are applied to the inner column by the bracket portions which are so displaced via the flange portion of the outer jacket, whereby the inner column is held by the bracket portions which are connected to the vehicle body via the outer jacket, the steering shaft can be fixed in a telescoping direction. Furthermore, since the pair of bracket portions are connected to the tension member, in the event that both the bracket portions are formed into shapes which are substantially symmetrical across the steering shaft, the displacement amounts of the respective bracket portions become equal, and therefore, since this allows the center position of the inner column to be maintained substantially constant, the deviation of the center of the steering shaft can be suppressed effectively.

### Brief Description of the Drawings

Fig. 1 is a side view of a tilt and telescoping power steering system which is a steering system according to a first embodiment .
Fig. 2 is a top view of the steering system shown in Fig. 1.
Fig. 3 is a cross-sectional view of the configuration shown in Fig. 1 taken along the line III-III and as viewed in a direction indicated by arrows.
Figs. 4(a), 4(b) are cross-sectional views of an outer jacket and an inner column of the configuration shown in Fig. 1 taken along the line IV-IV and as viewed in a direction indicated by arrows, in which Fig. 4(a) shows a state resulting before a force is applied and Fig. 4 (b) shows a state resulting after a force has been applied.
Figs. 5 (a), 5(b) are views similar to Fig. 4 which show an outer jacket and an inner column according to an embodiment of the present invention, in which Fig. 5(a) shows a state resulting before a force is applied and Fig. 5(b) shows a state resulting after a force has been applied.
Fig. 6 is a graph which shows a column holding force along axis of abscissas and a column stroke along axis of ordinates.
Fig. 7 is a view similar to Fig. 2 which shows a steering system according to another embodiment.
Fig. 8 is a view similar to Fig. 3 which shows a steering system according to a further embodiment.

Note that in the drawings, reference numerals and characters denote as follows; 11 and 221 an inner column, 12 a bracket, 313 a tension member, 16 and 17 fixing members, 21 and 221 211 an outer column, S a steering shaft, and L a manipulation lever.

### Best Mode for Carrying out the Invention

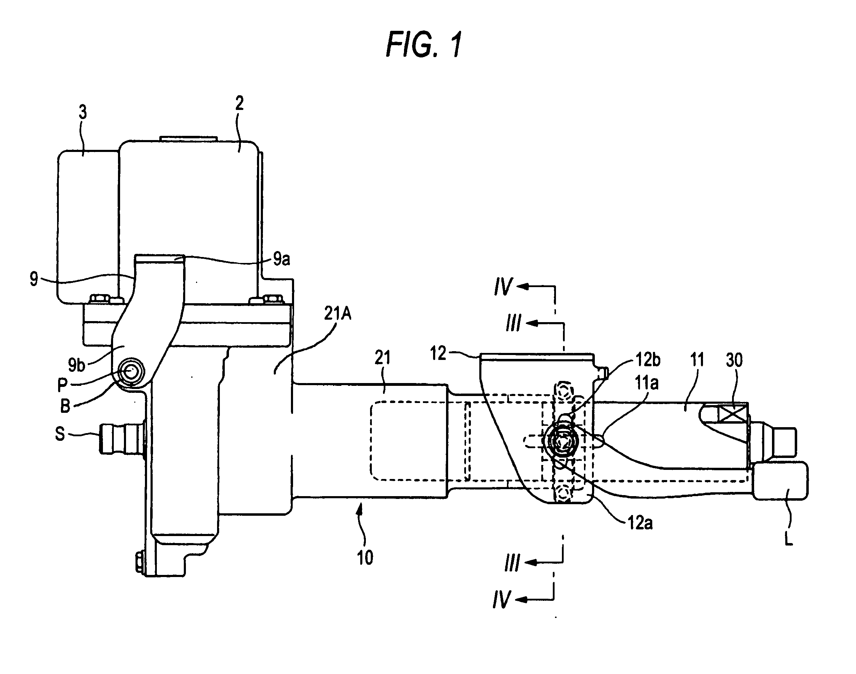

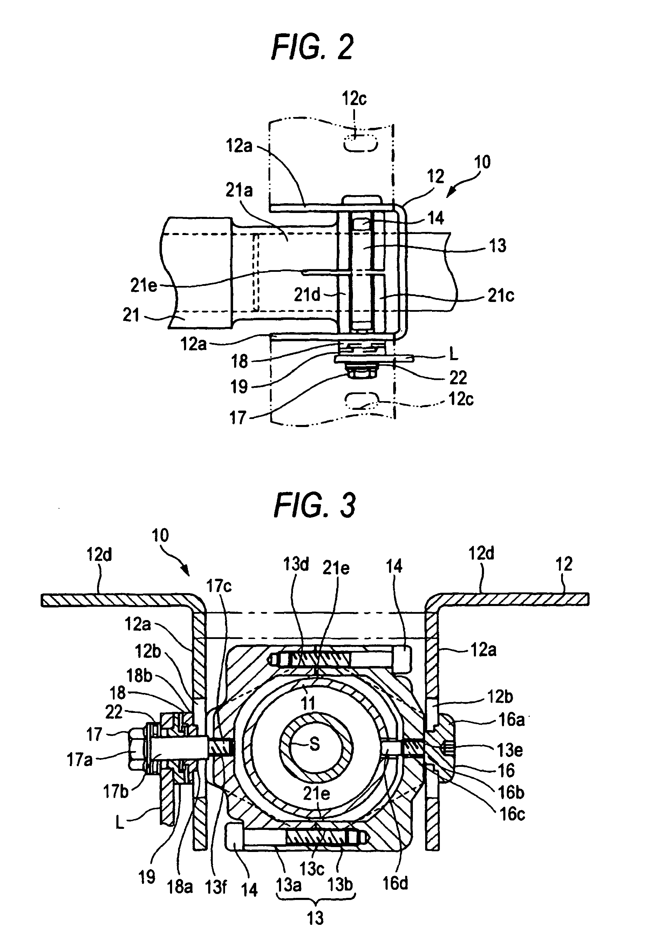

Hereinafter, tilt and telescoping steering systems according to embodiments will be described by reference to the drawings. One points out expressly that the second embodiment described below relates to an embodiment of the present invention, whereas the remaining embodiments help to understand the present invention. Fig. 1 is a side view of a tilt and telescoping electric power steering system (hereinafter, referred to as a steering system) according to a first embodiment Fig. 2 is a top view of the steering system 10 shown in Fig. 1. Fig. 3 is a cross-sectional view of the constitution shown in Fig. 1 taken along the line III-III and as viewed in a direction indicated by arrows.

In Fig. 1, an outer jacket 21 is integrated with a gear box 21A to which a motor 2 and a control ECU 3 attach, and a speed reduction mechanism, not shown, is connected to an output shaft of the motor 2 and a steering shaft S within the gear box 21A so as to enable the power transmission with a predetermined speed reduction ratio. The outer jacket 21 is attached to a vehicle body, not shown, via a pair of attachment brackets 9, which are provided forward, and an attachment bracket 12, which is provided rearward. The pair of attachment brackets 9 (only one of them is shown in Fig. 1), which are formed into shapes which are axially symmetrical with each other, each have an attachment portion 9a which is adapted to be attached to the vehicle body, not shown, with a bolt and a plate portion 9b which extends vertically from the attachment portion 9a for supporting the outer jacket 21 and are attached to the vehicle body symmetrically with respect to a perpendicular line which passes through the axis of the steering shaft S. Note that a bolt B, which passes through a hole (not shown) formed in the plate portion 9b so as to be screwed into the gear box 21A, has a tilt pivot function.

The attachment bracket 12 has a pair of vehicle body attachment portions 12d each having a vehicle body attachment hole 12c (Fig. 2) which are adapted to be attached to the vehicle body, not shown, with bolts and plate-like bracket portions 12a, 12a which extend in parallel with each other and in a vertical direction. The thicknesses of the respective bracket portions 12a are the same and the shapes thereof are axially symmetrical with each other.

As shown in Fig. 3, a tension member 13 is disposed between the bracket portions 12a, 12a. The tension member 13 constitutes a substantially annular member in a state in which it is built in and is made to be divided into two halves, that is, a left-half portion 13a and a right-half portion 13b, at the center thereof. To be more specific, the left-half portion 13a and the right-half portion 13b are integrated into a single unit by being fastened together using two bolts 14 which are screwed into a threaded hole 13c formed in the right-half portion 13b and a threaded hole 13d formed in the left-half portion 13a, respectively, whereby the tension member 13 can be obtained. By adopting the configuration, the left-half portion 13a and the right-half portion 13b are kept separated from each other before they are actually installed on a vehicle and are then integrated with each other using the bolts 14 when they are actually installed on the vehicle, whereby the assembling of the tension member is facilitated further.

A cylindrical inner column 11 is disposed inside the tension member 13. A steering shaft S is passed through the interior of the inner column 11 and is rotatably supported relative to the inner column 11 via a bearing 30 (Fig. 1).

As shown in Fig. 1, a telescoping groove 11a is formed in parallel with the axis of the steering shaft S in each side of the inner column 11. On the other hand, a tilt groove 12b is formed in each bracket portion 12a which constitutes part of an arc that would be formed about a pivot point P that is disposed forward of the rotational axis of the motor 2, and the telescoping groove 11a and the tilt groove 12b overlap each other partially, as viewed in a direction shown in Fig. 1, in such a state that the bracket portion 12a is properly assembled. A fixing member 16 is inserted from a left-hand side of Fig. 3 so as to be passed through the tile groove 12b, and a fixing member 17 is inserted from a left-hand side of Fig. 3 so as to be passed through the tilt groove 12b.

The fixing member 16 has a disc-shaped head portion 16a which is larger in diameter than the width of the right-hand tilt groove 12b in Fig. 3 and which has a tool engagement hole, a cylindrical tilt guide portion 16b which is brought into engagement with the tilt groove 12b to thereby be guided therealong and a male thread portion 16c which is screwed into a threaded hole 13e formed in the right-half portion 13b of the tension member 13 to thereby be securely fixed therein. Note that a locking portion 16d adapted to be brought into engagement with the telescoping groove 11a is provided at a distal end of the male thread portion 16c.

In contrast to this, the fixing member 17 has a hexagonal head portion with which a tool is brought into engagement, a cylindrical shank portion 17b and a thread portion 17c. The thread portion 17c is adapted to screw into a threaded hole 13f formed in the left-half 13a of the tension member 13 to thereby be securely fixed to the tension member 13. A stationary cam 18 having a tilt guide portion 18a with a substantially oval cross section which allows the tilt guide portion 18a to engage with the tilt groove 12b widthways and a stationary cam portion 18 which is larger in diameter than the tilt guide portion 18a, a movable cam 19 having a cam surface which engages with the stationary cam portion 18b, a manipulation lever L adapted to rotate together with the movable cam 19 and a thrust bearing (a roller bearing and a sliding bearing may suffice) 22 are disposed around the periphery of the shank portion 17b. Note that the stationary cam 18 and the movable cam 19 constitute an application member in the claim, and the fixing member 17 and the fixing member 16 constitute fixing members in the claim.

As shown in Fig. 2, the outer column 21 has a cylindrical portion 21a and a pair of flange portions 21c, 21d which are disposed in such a manner as to be spaced apart from each other in an axial direction on an outer circumference at a right-hand end thereof as viewed in Fig. 2. The cylindrical portion 21 encloses and holds the inner column 11. The tension member 13 is disposed between the flange portions 21c, 21d, which function as a pressurizing portion. In addition, a pair of slits 21e (which are represented as being larger than they really are) are formed in the cylindrical portion 21a at positions which are 90 degrees apart from the fixing members 16, 17, as shown in Fig. 3, and in such a manner as to extend from the right-hand end thereof so as to divide the flange portions 21c, 21d, as shown in Fig. 2. A maximum width (in a vertical direction as viewed in Fig. 2) of the tension member 13 is made smaller than a maximum width (a vertical direction as viewed in Fig. 2) of the outer jacket 21.

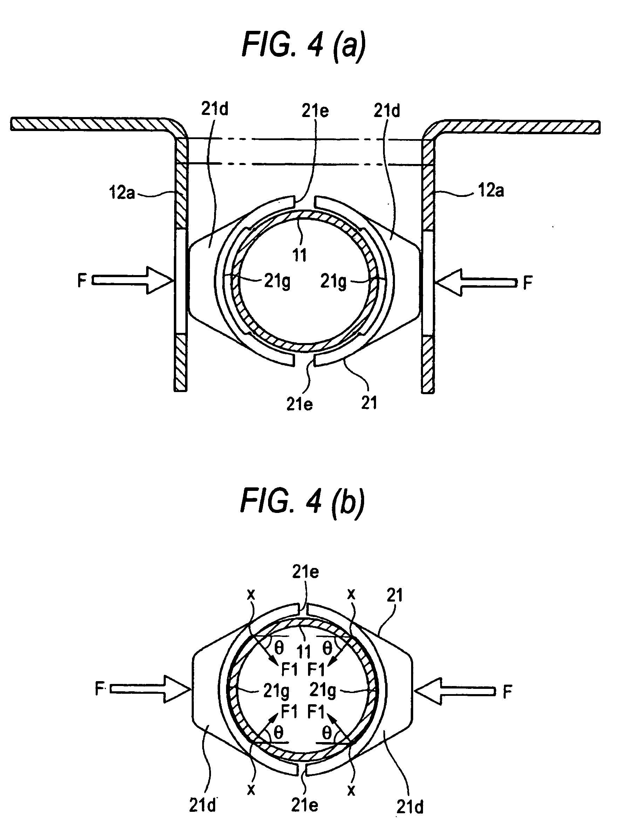

Figs. 4(a), 4(b) are cross-sectional views of the configuration shown in Fig. 1 taken along the line IV-IV and as viewed in a direction indicated by arrows. As shown in Figs. 4 (a), 4 (b), right-half and left-half inner circumferential surfaces of the flange portion 21d of the outer jacket 21 are formed into shapes which provide spaces between right-hand and left-hand surfaces of the inner column 11 and themselves in such a state that the flange portion 21d is in abutment with an outer circumferential surface of the inner column 11, that is, the right-half and left-half inner circumferential surfaces of the flange portion 21d have recesses 21g. Note that the recess 21g is preferably divided vertically into two halves by a horizontal line (referring to Figs. 4(a), 4(b), the direction of a force F which will be described later on) which passes through the axes of the steering shaft S and the inner column 11 so as to be substantially axially symmetrical with respect to the horizontal line. While not shown, inner circumferential surfaces of the flange portion 21c also have similar recesses.

Note that the recess 21g may be formed in such a manner as to extend continuously in the axial direction at least from the end portion of the outer jacket 21 through the flange portion 21d. Furthermore, recesses may be formed on the outer circumferential surface of the inner column 11. Namely, recesses may be provided on both or either of the inner circumferential surface of the outer jacket 21 and the outer circumferential surface of the inner column 11.

Next, an adjustment operation of the steering system of the embodiment will be described. When an operator rotates the manipulation lever L in a fastening direction, a protuberant portion of the stationary cam portion 18b of the stationary cam 18 and a protuberant portion of the movable cam 19 are brought into engagement with each other to thereby generate a force in a direction in which the protuberant portions are separated apart from each other. As this occurs, the left-hand bracket portion 12a as viewed in Fig. 3, which is pressed by the stationary cam 18, is displaced to the right. On the other hand, the fixing member 17, which is pressed to the left by the movable cam 19, displaces the tension member 13 to the left. Since the fixing member 16 moves to the left in association with the movement of the fixing member 17, the pair of bracket portions 12a, 12a are pressed against side portions of the flange portions 21c, 21d of the outer jacket 21 from both sides to thereby press against both sides of the tilt grooves 12b so as to apply an appropriate pressurizing force thereto, whereby the outer jacket 21 is fixed relative to the bracket portions 12a, the displacement of the inner column 11 in the tilt direction being thereby prevented.

On the other hand, based on the rotation of the manipulation lever L in the fastening direction, the left-hand bracket portion 12a as viewed in Fig. 3, which is pressed by the stationary cam 18, is displaced to the right to thereby be brought into abutment with the left-half portions of the flange portions 21c, 21d so as to displace them to the right in a similar fashion. Furthermore, a force applied to the tension member 13 is transmitted to the opposite fixing member 16, and the right-hand bracket portion 12a as viewed in Fig. 3, which is pressed by virtue of the force so transmitted, is then displaced to the left. When so displaced to the left, the right-hand bracket portion 12a is brought into abutment with the right-half portions of the flange portions 21c, 21d to thereby displace them to the left in a similar fashion so as to apply a pressurizing force on to the outer circumferential surface of the outer jacket 21. Since the slits 21e are deformed in such a manner as to be closed when the outer jacket 21 is pressed against from the sides thereof, an inside diameter of the outer jacket 21 is contracted, so that the inner column 11 can be held with an appropriate force.

According to the embodiment, since the shapes and thicknesses of the two bracket portions 12a are substantially equal, that is, the bending elastic modulus (and hence, rigidity) thereof is substantially equal, the bracket portions 12a receive the force in the direction in which they approach each other by operating the manipulation lever L in the fastening direction, whereby the bracket portions 12a are displaced in a substantially equal amount. Therefore, the inner column 11 receives, in turn, the pressurizing force from the left and right sides thereof as viewed in Fig. 3 to thereby be fixed in such a manner that the center of the inner column 11 coincides with a position which halves a distance between the bracket portions 12a, whereby the deviation of the center of the steering shaft S can be suppressed while preventing the displacements thereof in the tilt and telescoping directions.

Furthermore, as shown in Fig. 4(b), when the outer jacket 21 is pressed against by the two bracket portions 12a with a force F, the flange portion 21d (21c) does not abut with the inner column 11 at the recesses 21g thereon but abuts with the inner column 11 at boundary points X which are situated at circumferential edges of the recesses 21g, and therefore, a force F1 which presses the inner column 11 is generated at the boundary points X. Here, while the direction of the force F is horizontal, the direction of the force F1 is inclined at an angle θ relative to the horizontal direction. Consequently, the inner column is supported with a force of (2•F1cosθ) in the horizontal direction and is supported with a force of (2•F1sinθ) in the vertical direction.

For example, in the event that there is provided no recess 21g, since the inner column 11 is supported only with the force F applied in the horizontal direction from the outer jacket 21, the support of the inner column 11 in the perpendicular direction (the vertical direction as viewed in Fig. 4) has to depend on a frictional force between the outer jacket 21 and the inner column 11, the support with the frictional force cannot bear vibrations and a strong perpendicular force applied to the steering wheel, leading to a risk that the inner column is displaced. In this embodiment, by providing the recesses 21g, the inner column 11 can be securely supported also in the perpendicular direction with components of the forces F1 generated at the respective boundary points X. Note that in place of the provision of the recesses 21g, the curvature of the inner circumferential surface of the outer jacket 21 may be made smaller than the curvature of the outer circumferential surface of the inner column 11. In addition, in place of the provision of the recesses 21g, a plurality of projections may be formed on the inner circumferential surface of the outer jacket 21 for abutment with the outer circumferential surface of the inner column 11. In this case, the plurality of projections are preferably disposed axially symmetrically with respect to the horizontal line which passes through the steering shaft S.

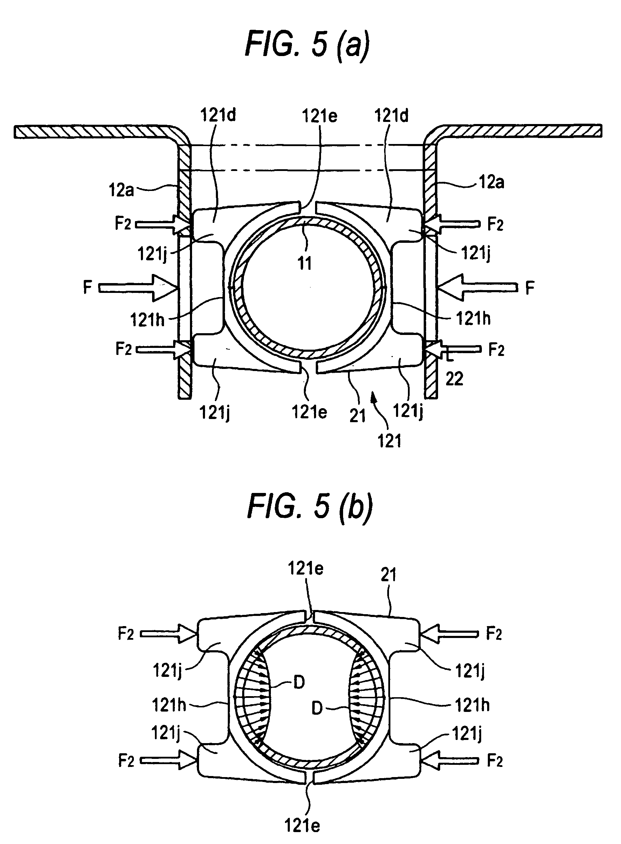

Figs. 5(a), 5(b) are similar drawings to Fig. 4 which show an outer jacket 121 and an inner column 11 according to a second embodiment. In this embodiment, a flange portion 212d has a substantially H-shape as viewed in a direction in which Fig. 5 (a) is represented. To be more specific, right-half portion and left-half portion of the flange portion 121d each have a pair of protuberant portions 121j which are brought into abutment with a bracket portion 12a and a notched portion (a recess) 121h formed therebetween. Note that the protuberant portions 121j are axially symmetrical with each other with respect to a horizontal line (the direction of a force F which will be described later on) . The notched portion 121h is preferably divided vertically into two halves by a horizontal line which passes through the axes of a steering shaft S and the inner column 11 so as to be substantially axially symmetrical with each other with respect to the horizontal line. While not shown, similar to the first embodiment, the flange portion is disposed at two locations in the axial direction, and the flange portions so disposed are formed into the same shape.

In Fig. 5, when the outer jacket 121 is pressed against by the two bracket portions 12a with a force F, the protuberant portions 121j of the flange portion 121d are pressed inwards with a force F2 (=F/2), respectively. As this occurs, since the rigidity of the flange portion 121d at a central portion is relatively low due to the formation of the notched portion 121h, the right-half portion and the left-half portion are deformed in such a manner as to close an inner circumferential surface of the flange portion 121d (that is, in such a manner that a location situated farther apart from a position which intersects with the direction of a relative displacement between the bracket portions 12a and fixing members 16, 17 is displaced more largely than a location situated closer to the position), when the protuberant portions 121j are pressed against with the force F2. Consequently, a pressurizing force distribution D as shown in Fig. 4 can be obtained which is applied between an inner circumferential surface of the outer jacket 121 and an outer circumferential surface of the inner column 11.

Namely, in this embodiment, since the inner column 11 can be supported from directions which are different from the direction of the force F due to the pressurizing force distribution D, the inner column 11 can be supported in the perpendicular direction in an ensured fashion. Thus, since the outer jacket 121 contacts the inner column 11 in such a manner as to surround the outer circumferential side thereof, the contact area is increased, the holding force of the inner column 11 being thereby enhanced.

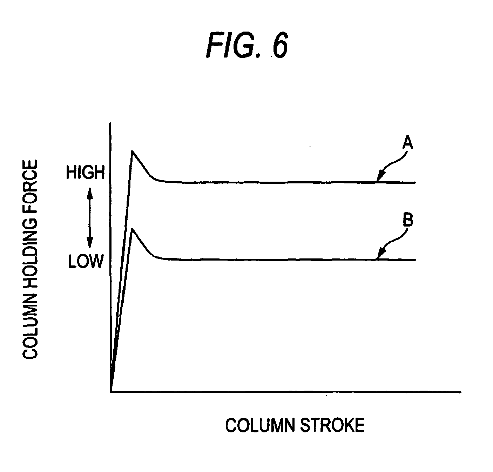

Fig. 6 is a graph which shows a column holding force along axis of abscissas and a column stroke along axis of ordinates. In Fig. 6, a graph A denotes the characteristics of the steering system according to this embodiment, whereas a graph B denotes the characteristics of a steering system according to a comparison example in which no notched portion 121h is provided. The characteristics denoted by the graph A and graph B are characteristics resulting when the same fastening force F (F shown in Figs. 4, 5) is applied. As is clear from Fig. 6, according to the steering system of the embodiment, even in the event that the same fastening force F as that of the comparison example is applied in the direction in which the bracket portions 12a and the fixing members 16, 17 are fastened together, the holding force of the inner column 11 is increased, and an absorption energy (column holding force x column stroke) at the time of collapse can be increased largely.

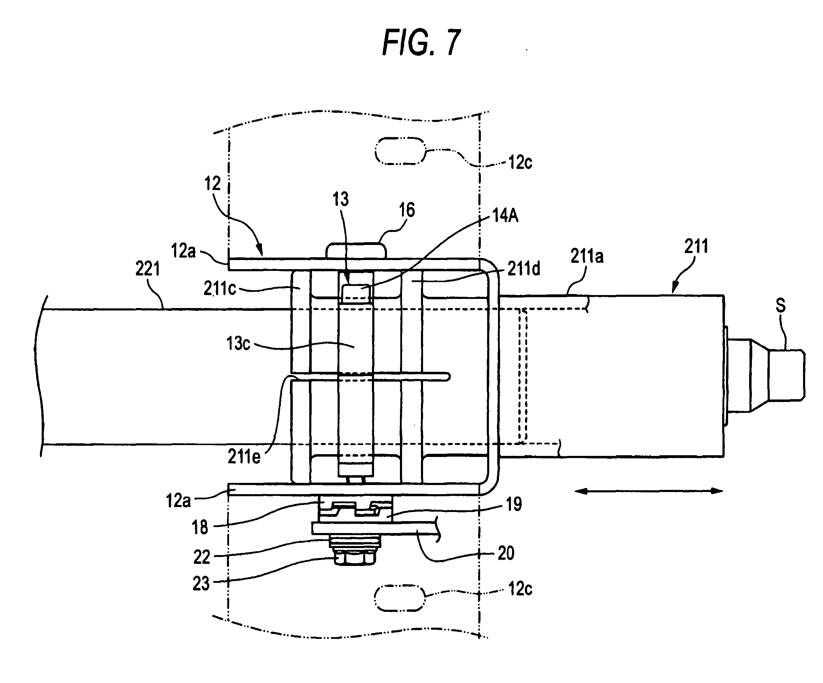

Fig. 7 is a similar drawing to Fig. 2 which shows a steering system according to another embodiment . Note that there is provided a steering wheel attaching portion to a right-hand side of Fig. 7. This embodiment differs from the embodiment shown in Fig. 2 mainly in the shapes of an outer jacket 211 and an inner column 221. To be more specific, in this embodiment, an outer jacket 211, which is disposed on the side of a steering wheel, not shown, has, as shown in Fig. 7, a cylindrical portion 211a and a pair of plate-like flange portions 211c, 211d which are disposed on an outer circumferential surface of an end portion thereof in such a manner as to be spaced apart from each other in the axial direction of a steering shaft S. The cylindrical portion 211a encloses and holds an inner column 221 which is disposed on the side of a steering mechanism, not shown. A tension member 13 is disposed between the flange portions 211c, 211d, which function as a pressurizing portion, and the configuration of the tension member 13 so disposed is similar to those of the embodiments that have been described above. Slits 211e (there exists the other slit on an opposite side of the cylindrical portion 211a in Fig. 7) are formed in the cylindrical portion 211a at an uppermost portion and a lowermost portion thereof in such a manner as to extend in the axial direction from an end portion thereof. In addition, grooves (not shown) are formed in a pair of bracket portions 12a of a bracket 12 in such a manner as to extend in the tilting direction for engagement with a fixing member 16 and the like. Like reference numerals are given to constituent components which are common to the embodiments that have been described above, and the description thereof will be omitted.

Also in this embodiment, by rotating a manipulation lever 20, both the bracket portions 12a can be made to approach or separate from each other. When the bracket portions 12a are separated from each other, since the outer jacket 211 can be displaced relatively with respect to the bracket 12, a tilt operation of the outer jacket 211 can be effected in such a manner that the outer jacket 211 is guided along tilt grooves, not shown. In addition, when the bracket portions are separated from each other, since the outer jacket 211 can be displaced relatively with respect to the inner column 221, a telescoping operation of the outer jacket 211 can be effected in such a manner that the outer jacket 211 is guided along the inner column 221. Note that in this embodiment, a space between the flange portions 211c, 211d is set wider so that the displacement in the telescoping direction is not interrupted, which would otherwise occur due to the interference of the tension member 13 with the outer jacket 211. Namely, when the telescoping length becomes maximum, the tension member 13 is made to be brought into abutment with the flange 211c, whereas when the telescoping length becomes minimum, the tension member is made to be brought into abutment with the flange portion 211d. In addition, while there occurs a case where the outer jacket 211 is pushed with a strong force due to a secondary collision, attachment holes 12c in the bracket 12 are both formed into a notched shape which extends in the axial direction of the steering shaft S, so that a dislocation capsule which is adapted to be dislocated when receiving impact can be interposed herein.

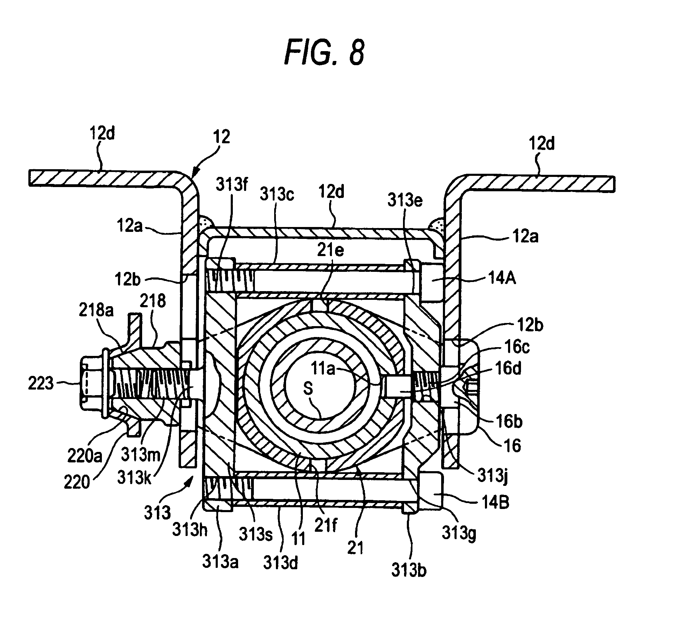

Fig. 8 is a similar drawing to Fig. 3 which shows a steering system according to a further embodiment. This embodiment differs from the second embodiment in that the shape of a tension member 313 differs and that a nut member 218 and a male thread portion 313m which screws into the nut member 218 are provided in place of the stationary cam 18 and the movable cam 19. The tension member 313 has, as constituent components thereof, a left-half portion 313a, which is formed substantially into a T-shape, a right-half portion 313b, which is formed into an elongate plate-like shape and tubes 311c, 313d which connect the left-half portion 313a and the right-half portion 313b at upper and lower ends thereof, respectively, as viewed in Fig. 8. The left-half portion 313a is integrally made up of an elongate plate-like support portion 313s and a shank portion 313k which is an extending portion which extends from the center of the support portion.

In Fig. 8, the left-half portion 313a and the right-half portion 313b are connected to each other at the upper ends thereof by a bolt 14A which is passed through a hole 313e formed in the right-half portion 313b and the tube 313c so as to be screwed into a threaded hole 313f in the left-half portion 313a and the lower ends thereof by a bolt 14B which is passed through a hole 313g formed in the right-half portion 313b and the tube 313d so as to be screwed into a threaded hole 313h in the left-half portion, whereby the tension member 313 is attached in such a manner as to hold therebetween an outer circumference of an end portion of an outer jacket 21. Consequently, the tension member 313 can be separated into the left-half portion 313a and the right-half portion 313b, and due to this, they are superior in assembling characteristic when they are actually installed on a vehicle, and on the other hand, the left-half portion 313a and the right-half portion 313b form a circumferentially continuous annular shape in such a state that they are fixed together by means of the bolts 14A, 14B to thereby enhance the rigidity of the tension member 313. Since standard bolts can be used for the bolts 14A, 14B, and the tubes 313c, 313d can be manufactured only by cutting a circular tube to a predetermined length, the production costs can be reduced further. Note that a sheet material may be rolled and welded together along sides thereof for use for the tubes 313c, 313d. In addition, by assembling flange portions 21c, 21d of the outer jacket 21 as separate members, the assembling of the tension member 313 can be effected using even an integrally molded product which continues in the circumferential direction or a product which is formed integrally by virtue of welding or the like.

Furthermore, in this embodiment, the nut member 218 is attached in such a manner as to be screwed on to the male thread portion 313m formed on the shank portion 313k of the left-half portion 313a of the tension member 313. An outward end (a left end as viewed in Fig. 8) of the nut member 218 constitutes a tapered surface 218a, and a tapered portion 220a of a manipulation lever 220 is brought into engagement with the tapered surface 218a, and furthermore, a bolt 223 is screwed into the nut member 218a so as to be securely fixed therein, whereby the manipulation lever 220 is attached to the nut member 218 in such a manner as to prohibit the relative rotation thereof. Like reference numerals are given to constituent components which are common to the embodiments that have been described above, and the description thereof will be omitted.

In this embodiment, by rotating the manipulation lever 220, the nut member 218 moves in a screwing fashion relative to the male thread portion 313m of the tension member 313. A space between the nut member 218 and the tension member 313 is varied in association with the screwing movement of the nut member 218, and this allows both bracket portions 12a to approach or separate from each other, whereby the fixing or relative displacement of an inner column 11 and the outer jacket 21 can be effected. Note that the nut member 218 and a fixing member 16 function as fixing members.

While the invention has been described in detail or by reference to the specific embodiments, it is clear to those skilled in the art that the invention can be changed and modified variously without departing from the scope of the appended claims.

The subject patent application is based on a Japanese patent application (the application number 2003-197833) filed on July 16, 2003 and a Japanese patent application (the application number 2004-1417930) filed on May 12, 2005,

### Industrial Applicability

As has been described heretofore, the invention can be applied to, for example, a vehicular tilt and telescoping steering system.

## Claims

1. A steering system for supporting a steering shaft (S) to which a steering wheel attaches so as to be adjustable of an axial displacement of the steering wheel, the steering system comprising:
an inner column (11) for rotatably supporting the steering shaft (S);
an outer jacket (21) adapted to take, when the outer jacket (21) is pressed in a facing direction, either a first state in which an outer circumferential surface of the inner column (11) is held in such a manner as to disable the adjustment of the axial displacement; or a second state in which the outer circumferential surface of the inner column (11) is held in such a manner as to enable the adjustment of the axial displacement;
a bracket portion (12) for fixing the outer jacket (21) to a vehicle body; and
a fixing member (16, 17) for connecting the outer jacket (21) with the bracket portion (12),
wherein when the outer jacket (21) is shifted from the second state to the first state, the inner column (11) receives pressures applied thereto by the outer jacket (21) in a plurality of directions which are different from at least the facing direction **characterized in that**
the outer jacket (21) has a flange portion (121d) of an H-shape with a right-half portion and a left-half portion, each has a pair of protuberant portions (121j) and therebetween a recess (121 h) formed at a position where a horizontal line (F) which intersects with the axis of the inner column (11) passes, wherein the protuberant portions (121j) are axially symmetrical with each other with respect to the horizontal line (F),
and wherein each of the right-half portion and the left-half portion has a minor rigidity at a central portion, where the recess (121 h) is formed, to allow the protuberant portions (121j) to be pressed inwards by a predetermined pressurizing force (F2) applied thereto.

2. The steering system according to claim 1, **characterized in that** the steering system comprises:
a pair of bracket portions (12a) mounted on the vehicle body and disposed at positions which face each other with respect to an axis of the steering shaft (S);
a tension member (13) provided in such a manner as to extend between the pair of bracket portions (12a);
two fixing members (16, 17) for fixing the tension member (13) relative to the pair of bracket portions (12a); and
an application member (18, 19) provided between the tension member (13) and the fixing members (16, 17) and the application member (18, 19) applying a relative displacement between the bracket portions (12a) and the fixing members (16, 17) in accordance with an operation of a manipulation lever (L);
wherein the outer jacket (21), held to the vehicle body through the connection of the tension member (13), the bracket portions (12a) and the fixing members (16, 17), having:
the flange portion (121d) where an outer circumference of the outer jacket (21) contacts with both of the pair of bracket portions (12a) at positions located at least between the pair of bracket portions (12a) by virtue of relative displacement of the pair of bracket portions (12a); and
an inner circumferential surface which encloses and supports the outer circumference of the inner column (11), which receives pressurizing forces applied thereto by the bracket portions (12a) and the fixing members (16, 17) in a plurality of directions which are different from a relative displacement direction of the outer jacket (21).

3. The steering system as set forth in Claim 2, **characterized in that** the outer jacket (21) deflects in such a manner that a location thereof which is circumferentially farther apart from the central portion is displaced more largely than a location thereof which is circumferentially closer to the central portion, when the outer jacket (21) contacts the inner column (11) as the pair of bracket portions (12a) approach each other.

## Patentansprüche

1. Lenksystem, mit dem eine Lenkwelle (S) getragen wird, an der ein Lenkrad so angebracht ist, dass eine axiale Verschiebung des Lenkrades eingestellt werden kann, wobei das Lenksystem umfasst:
eine innere Säule (11), die die Lenkwelle (S) drehbar trägt;
eine äußere Hülse (21), die so eingerichtet ist, dass sie, wenn die äußere Hülse (21) in eine Vorwärtsrichtung gedrückt wird, entweder einen ersten Zustand, in dem eine Außenumfangsfläche der inneren Säule (11) so gehalten wird, dass die Verstellung der axialen Verschiebung verhindert wird, oder einen zweiten Zustand einnimmt, in dem die Außenumfangsfläche der inneren Säule (11) so gehalten wird, dass die Verstellung der axialen Verschiebung ermöglicht wird;
einen Trägerabschnitt (12) zum Befestigen der äußeren Hülse (21) an einer Fahrzeugkarosserie; und
ein Befestigungselement (16, 17) zum Verbinden der äußeren Hülse (21) mit dem Trägerabschnitt (12);
wobei wenn die äußere Hülse (21) von dem zweiten Zustand in den ersten Zustand verschoben wird, die innere Säule (11) Drücke aufnimmt, die durch die äußere Hülse (21) in einer Vielzahl von Richtungen darauf ausgeübt werden, die sich wenigstens von der Vorwärtsrichtung unterscheiden,
**dadurch gekennzeichnet, dass**
die äußere Hülse (21) einen Flanschabschnitt (121d) in einer H-Form mit einem Abschnitt der rechten Hälfte und einem Abschnitt der linken Hälfte hat, die jeweils paarige vorspringende Abschnitte (121j) und zwischen diesen eine Vertiefung (121h) aufweisen, die an einer Position ausgebildet ist, an der eine horizontale Linie (F) verläuft, die die Achse der inneren Säule (11) schneidet, wobei die vorspringenden Abschnitte (121j) in Bezug auf die horizontale Linie (F) axialsymmetrisch zueinander sind und jeweils der Abschnitt der rechten Hälfte und der Abschnitt der linken Hälfte an einem Mittelabschnitt, an dem die Vertiefung (121 h) ausgebildet ist, geringere Steifigkeit hat, so dass die vorspringenden Abschnitte (121j) durch eine vorgegebene Druckkraft (F2), die auf sie ausgeübt wird, nach innen gepresst werden können.

2. Lenksystem nach Anspruch 1, **dadurch gekennzeichnet, dass** das Lenksystem umfasst:
ein Paar Trägerabschnitte (12a), die an der Fahrzeugkarosserie angebracht und an Positionen angeordnet sind, die einander in Bezug auf eine Achse der Lenkwelle (S) zugewandt sind;
ein Spannelement (13), das so vorhanden ist, dass es sich zwischen den paarigen Trägerabschnitten (12a) erstreckt;
zwei Befestigungselemente (16, 17) zum Befestigen des Spannelementes (13) relativ zu den paarigen Trägerabschnitten (12a); und
ein Wirkelement (18, 19), das zwischen dem Spannelement (13) und den Befestigungselementen (16, 17) vorhanden ist, wobei das Wirkelement (18, 19) bei einer Betätigung eines Bedienhebels (L) eine relative Verschiebung der Trägerabschnitte (12a) und der Befestigungselemente (16, 17) bewirkt;
wobei die äußere Hülse (21), die über die Verbindung des Spannelementes (13) an der Fahrzeugkarosserie gehalten wird, die Trägerabschnitte (12a) und die Befestigungselemente (16, 17) aufweisen:
den Flanschabschnitt (121d), an dem ein Außenumfang der äußeren Hülse (21) an Positionen, die sich wenigstens zwischen den paarigen Trägerabschnitten (12a) befinden, auf Grund relativer Verschiebung der paarigen Trägerabschnitte (12a) mit beiden der paarigen Trägerabschnitte (12a) in Kontakt ist; und
eine Innenumfangsfläche, die die Außenumfangsfläche der inneren Säule (11) umschließt und trägt und die Druckkräfte aufnimmt, die durch die Trägerabschnitte (12a) und die Befestigungselemente (16, 17) in einer Vielzahl von Richtungen ausgeübt werden, die sich von einer Richtung relativer Verschiebung der äußeren Hülse (21) unterscheiden.

3. Lenksystem nach Anspruch 2, **dadurch gekennzeichnet, dass** sich die äußere Hülse (21) so biegt, dass eine Position derselben, die in Umfangsrichtung weiter von dem Mittelabschnitt entfernt ist, stärker verschoben wird als eine Position derselben, die in Umfangsrichtung näher an dem Mittelabschnitt liegt, wenn die äußere Hülse (21) mit der inneren Säule (11) in Kontakt kommt, wenn sich die paarigen Trägerabschnitte (12a) einander nähern.

## Revendications

1. Système de direction pour supporter un arbre de direction (S) sur lequel un volant de direction est fixé de façon à pouvoir régler le déplacement axial du volant de direction, le système de direction comprenant :
une colonne intérieure (11) pour supporter à rotation l'arbre de direction (S) ;
une chemise extérieure (21) adaptée pour prendre, quand la chemise extérieure (21) est pressée dans une direction lui faisant face, soit un premier état dans lequel une surface circonférentielle extérieure de la colonne intérieure (11) est maintenue de façon à empêcher le réglage du déplacement axial ; ou un second état dans lequel la surface circonférentielle extérieure de la colonne intérieure (11) est maintenue de façon à permettre le réglage du déplacement axial ; une partie de support (12) pour fixer la chemise extérieure (21) sur une carrosserie de véhicule ; et
un élément de fixation (16, 17) pour connecter la chemise extérieure (21) avec la partie de support (12),
dans lequel quand la chemise extérieure (21) est décalée du second état vers le premier état, la colonne intérieure (11) reçoit des pressions qui lui sont appliquées par la chemise extérieure (21) dans une pluralité de directions qui sont différentes depuis au moins la direction lui faisant face,
**caractérisé en ce que**
la chemise extérieure (21) a une partie de rebord (121d) en forme de H avec une demi-partie droite et une demi-partie gauche, chacune a une paire de parties saillantes (121j) et entre elles un évidement (121h) formé en une position où une ligne horizontale (F) qui coupe l'axe de la colonne intérieure (11) passe, dans lequel les parties saillantes (121j) sont axialement symétriques par rapport à la ligne horizontale (F), et dans lequel chacune de la demi-partie droite et la demi-partie gauche a une rigidité mineure en une partie centrale, où l'évidement (121h) est formé, pour permettre aux parties saillantes (121j) d'être pressées vers l'intérieur par une force de pression (F2) prédéterminée qui leur est appliquée.

2. Système de direction selon la revendication 1, **caractérisé en ce que** le système de direction comprend :
une paire de parties de support (12a) montées sur la carrosserie de véhicule et disposées en des positions qui se font face par rapport à un axe de l'arbre de direction (S) ;
un élément de tension (13) placé de façon à s'étendre entre la paire de parties de support (12a) ;
deux éléments de fixation (16, 17) pour fixer l'élément de tension (13) par rapport à la paire de parties de support (12a) ; et
un élément d'application (18, 19) placé entre l'élément de tension (13) et les éléments de fixation (16, 17) et l'élément d'application (18, 19) appliquant un déplacement relatif entre les parties de support (12a) et les éléments de fixation (16, 17) selon un actionnement d'un levier de manipulation (L) ;
dans lequel la chemise extérieure (21), maintenue sur la carrosserie de véhicule par la connexion de l'élément de tension (13), les parties de support (12a) et les éléments de fixation (16, 17), ayant :
la partie de rebord (121d) où une circonférence extérieure de la chemise extérieure (21) entre en contact avec les deux de parties de support (12a) en des positions situées au moins entre la paire de parties de support (12a) de la paire grâce au déplacement relatif de la paire de parties de support (12a) ; et
une surface circonférentielle intérieure qui enferme et supporte la circonférence extérieure de la colonne intérieure (11), qui reçoit des forces de pression qui lui sont appliquées par les parties de support (12a) et les éléments de fixation (16, 17) dans une pluralité de directions qui sont différentes d'une direction de déplacement relatif de la chemise extérieure (21).

3. Système de direction selon la revendication 2, **caractérisé en ce que** la chemise extérieure (21) dévie de telle manière qu'un emplacement de celle-ci qui est plus éloigné circonférentiellement de la partie centrale est déplacé plus fortement qu'un emplacement de celle-ci qui est circonférentiellement plus proche de la partie centrale, quand la chemise extérieure (21) entre en contact avec la colonne intérieure (11) quand la paire de parties de support (12a) s'approchent l'une de l'autre.
